Europäisches Patentamt

European Patent Office

Office européen des brevets

(11) Publication number: **0 342 966**
**A2**

# EUROPEAN PATENT APPLICATION

(21) Application number: 89305008.8

(22) Date of filing: 17.05.89

(51) Int. Cl.⁴: **G 11 B 5/66**
**G 11 B 5/82**

(30) Priority: 18.05.88 JP 119145/88
26.10.88 JP 268218/88
26.10.88 JP 268219/88
31.10.88 JP 273076/88

(43) Date of publication of application:
**23.11.89 Bulletin 89/47**

(84) Designated Contracting States: **DE FR IT**

(71) Applicant: **SUMITOMO METAL MINING COMPANY LIMITED**
**11-3, Shinbashi 5-chome Minato-ku**
**Tokyo 105 (JP)**

(72) Inventor: **Kuzuo, Ryuichi c/o Central Research Lab. Sumitomo**
**Metal Mining Co. Ltd. 18-5, 3-chome, Nakakokubun**
**Ichikawa City Chiba Prefecture (JP)**

Kawamoto, Atsushi c/o Centr. Res. Lab. Sumitomo
Metal Mining Co. Ltd. 18-5, 3-chome, Nakakokubun
Ichikawa City Chiba Prefecture (JP)

Ohmori, Kenji c/o Central Research Lab. Sumitomo
Metal Mining Co. Ltd. 18-5, 3-chome, Nakakokubun
Ichikawa City Chiba Prefecture (JP)

Hinoshita, Yoko c/o Central Research Lab. Sumitomo
Metal Mining Co. Ltd. 18-5, 3-chome, Nakakokubun
Ichikawa City Chiba Prefecture (JP)

Tada, Junya c/o Central Research Lab. Sumitomo
Metal Mining Co. Ltd. 18-5, 3-chome, Nakakokubun
Ichikawa City Chiba Prefecture (JP)

(74) Representative: **Hartley, David et al**
**c/o Withers & Rogers 4 Dyer's Buildings Holborn**
**London, EC1N 2JT (GB)**

(54) **Magnetic disc.**

(57) A magnetic disc having a first layer substantially comprising Cr and a second layer which is a filmy magnetic recording medium of Co-Ni or Co-system, formed on a non-magnetic substrate, wherein oxygen is incorporated in the first layer. The static magnetic property and electro-magnetic convention property, as well as other properties, e.g., coercive force and corrosion resistance can be improved remarkably. In additon, the disc show excellent crystal orientation with no variations on every film-formation.

EP 0 342 966 A2

Description

# MAGNETIC DISC

## BACKGROUND OF THE INVENTION

Field of the Invention

The present invention concerns a magnetic disc in which a filmy magnetic recording medium of excellent and stable crystal orientation property is formed on a non-magnetic substrate.

Description of the Prior Art

For magnetic discs such as floppy discs and hard discs, those prepared by kneading a magnetic powder such as of $\gamma$-$Fe_2O_3$ or Fe with a synthetic resin binder and coating the resultant product on a non-magnetic substrate have been used. However, since the ratio of the magnetic powder in the magnetic layer of such magnetic discs is as low as from 30 to 40 % by volume, saturation magnetic flux density is not sufficient as the magnetic recording medium to cause troubles as the magnetic discs used for high density recording.

In view of the drawback in the coated-type magnetic recording media those magnetic recording media having thin metal magnetic film formed on a non-magnetic substrate and capable of high density recording have been developed.

As the method for forming the magnetic recording media of such thin metal film type, there have been known (1) a wet process such as chemical plating or (2) a dry process such as sputtering, vacuum vapor deposition or ion plating. For the chemical plating method in (1), although thin metal film media such as Co-P, Co-Ni-P, etc. have been proposed, they involve such problems as complicate structure of laminate films, crushing resistance upon contact with a recording head, reliability such as in error characteristics, stability upon film-formation, etc. The dry process (2) has been proposed in order to overcome such problems and Co and Co-Ni have now been under study for the material. However, in a case where the thin film formed has a hcp structure, the C-axis in the hcp structure as an easy magnetization axis tends to be oriented vertically to the film surface and it can not be said satisfactory media as the in-plane magnetic recording. Then, in order to reduce the C-axis orientation, there have been proposed addition of other elements, for example, nitrogen (Japanese Patent Unexamined Publication Sho 57-72307), oxygen (Japanese Patent Unexamined Publication Sho 60-163225), chromium (Ishikawa, Tani, et. al, Proceedings for the United Meeting of the Applied Physics Association in 1985, p 29 : G-1-4), tungsten (R. D. Fisher, et al : IEEE Trans. Magn. MAG-17, 3190 (1981)), Platinum (J. A Aboaf, et al., IEEE Trans. Magn. MAG-19, 1514 (1983)), or laminate structure such as of Co-Ni/Cr or Co-Ni-Cr/Cr (Ishikawa, Tani, et al., Proceedings for the United Meeting of the Applied Physics Association in 1985, p 29; G 1-4. As a method of manufacturing the magnetic disc of such a laminated structure, there has been known a method of disposing a mask between a target and a substrate or a method of making the diameter of a target smaller thereby entering sputtering particles obliquely to the substrate (Japanese Patent Unexamined Publications Sho 62-82516, 62-82517, etc.). Thus, there has been proposed a magnetic disc in which a first layer, for example, a Cr layer and a second layer, for example, a Co layer or Co+Ni layer as described above (magnetic recording media) is laminated on a non-magnetic substrate.

The magnetic disc of such a laminated structure comprises the first non-magnetic Cr layer having a thickness from 1000 to 6000 Å and the second magnetic Co or Co-Ni film layer having a thickness about from 250 to 500 Å and shows excellent magnetic characteristics such as saturation magnetic flux density, coercive force and squareness ratio. However, even in this case, the static magnetic characteristics and electromagnetic conversion characteristics are still insufficient, i.e., the coercive force Hc of about 1200 Oe, the ratio of the coercive force Hc between the circumferential and the diametrical directions (ratio of coercive force : Hc ratio) of from 1.2 to 1.7, squareness ratio S of about 0.8, squareness ratio S* of coercive force of 0.85 and magnetic anisotropic constant of $3 - 6 \times 10^5$ erg/cc and SN ratio of from 28 to 32 dB.

## SUMMARY OF THE INVENTION

The object of the present invention is to overcome the foregoing problems and provide a magnetic disc capable of improving the static magnetic characteristics and the electromagnetic conversion characteristics as much as possible.

As a result of earnest studies made by the present inventors, et al. for overcoming the foregoing problems, it has been found that the foregoing object can be attained by introducing oxygen into a first layer substantially comprising Cr in a magnetic disc and the present invention has been accomplished based on such a finding.

That is, the foregoing object can be attained in accordance with the present invention in a magnetic disc having a first layer substantially comprising Cr and a second layer as a Co-Ni or Co series filmy magnetic recording medium, wherein oxygen is incorporated in the first layer.

As the non-magnetic substrate in the present invention, there may be used aluminum (Al), aluminum (Al) applied with Ni-P primer layer, aluminum oxide ($Al_2O_3$), heat resistant plastic, glass etc.

The film layer formed as the first layer in the non-magnetic substrate is a Cr film layer which substantially comprises Cr or may consist of Cr alone. In addition, at least one of metal elements selected from the group consisting of Cu, Ta, W, Nb, Ti, V, Zr, Mo and Zn may be added in an amount of not more than 10% by weight in order to improve the coercive force of the magnetic disc. If the addition amount of the metal element exceeds 10% by weight, the coercive force of the magnetic disc is reduced. The first layer is considered to substantially comprise Cr in the meaning of containing these metal elements.

In the present invention, it is essential that oxygen is incorporated in the Cr film layer and the content is preferably from 500 ppm to 10% by weight. If the content is less than 500 ppm, no substantial effect due to oxygen can be obtained for improving the crystal orientation and thus improving the static magnetic property and electromagnetic conversion property of the thin Cr film layer formed as the first layer and the crystal orientation of the Co film layer or Co-Ni film layer in the second layer.

On the other hand, if the content exceeds 10% by weight, an oxide layer is formed to the surface of the Cr film layer in the first layer tending to hinder the epitaxial growth of the Co film layer or Co-Ni film layer as the second layer which rapidly deteriorates the magnetic property. Further, the first layer is formed to a film thickness desirably within a range from 500 to 6000 Å, and oxygen incorporated, for example, by introducing an oxygen gas during formation of the first layer by using a variable leak valve or mass flow controller.

Then, for the Co-Ni system in Co or Co-Ni system filmy magnetic recording medium formed on the first layer substantially comprising Cr film layer, it is preferred that Ni is contained by not more than 30% by weight. If the content exceeds 30% by weight, the residual magnetization in the layer is remarkably reduced to deteriorate the electromagnetic conversion property. Further, it is preferred to incorporate at least one of rare earth elements selected from the group consisting of Y, La, Ce, Pr, Nd, Sm, Gd, Tb and Dy in an amount of not more than 15% by weight into the Co of Co-Ni series film layer of the second layer for improving the corrosion resistance of the magnetic disc. If the content exceeds 15% by weight, the coercive force Hc or the saturation magnetization ratio tends to be reduced. Furthermore, it is preferred to incorporate oxygen also in the second layer as in the case of supplying oxygen to the first layer in view of the improvement for the coercive force Hc and the coercive force ration Hc ratio, and the preferred content is from 500 ppm to 10 % by weight. It is considered that the incorporation of oxygen makes the crystal grains finer, and oxygen segregates at the grain boundary to isolate individual crystal grains. If the amount of oxygen is less than 500 ppm, no substantial effect of oxygen can be obtained, as well as the static magnetic property of the magnetic disc tends to be varied on every film-formation due to a slight amount of impurity gases mainly comprising oxygen evolved in the device during film-formation On the other hand, if the oxygen content exceeds 10 % by weight, the Co or Co-Ni film layer in the second layer is oxidized to deteriorate the static magnetic property. The film thickness of the second layer formed is preferably from 100 to 1500 Å, because no sufficient reproducing output can be obtained with the film thickness of less than 100 Å, whereas the coercive force Hc is reduced remarkably if it exceeds 1500 Å.

The films in the first and the second layers in the present invention can be formed by way of sputtering, vacuum deposition, ion plating, etc.

Example
The present invention is to be described referring to Examples.

Example 1
Onto an aluminum substrate of 1.5 mm thickness applied with Ni-P primer plating, a film layer consisting only of Cr with 3000 Å film thickness was formed as the first layer by using a magnetron sputtering device and an oxygen gas was introduced into the first layer by using a variable leak valve to prepare specimens of different oxygen contents. Then, filmy magnetic recording media of 500 Å thickness comprising 20 wt% of Ni and the balance of Co was formed as the second layer, to prepare magnetic discs. In all of the specimens, the film-forming conditions are as shown in Table 1.

3

Table 1

|  | First layer | Second layer |
|---|---|---|
| Vacuum degree attained ($\times 10^{-5}$Pa) | 8 | 8 |
| Sputtering gas pressure (Ar, Pa) | 0.44 | 1.2 |
| Sputtering gas pressure ($O_2$, $\times 10^{-3}$pa) | 0.2 - 4 | - |
| Target current (A) | 0.5 | 0.4 |
| Sputtering power (W) | 140 | 170 |
| Target-substrate distance (mm) | 100 | 100 |
| Substrate temperature (°C) | 70 | 70 |

The thus obtained magnetic discs were cut and the compositions were analyzed respectively by using SIMS analysis and chemical analysis together and magnetic property was measured by a vibrating sample magnetometer and torque meter. The obtained results are shown in Table 2.

Comparative Example 1

Magnetic discs were manufactured by film-formation under film-forming conditions shown in Table 1 for the case of supplying no oxygen to the first layer (oxygen contet : 100 ppm). Various tests were conducted in the same manner as in Example 1 for the obtained magnetic discs. The results obtained are shown in Table 2.

Table 2

|  | Specimen No. | Oxygen content in the first layer (wt) | Magnetic property | | | | | |
|---|---|---|---|---|---|---|---|---|
|  |  |  | Coercive force Hc (Oe) | Coercive force ratio: Hc ratio (circumferencial/ diametrical) | Squareness ratio S | Squareness ratio of coercive force S* | Magnetic anisotropic constant ($\times 10^5$ erg/cc) | SN ratio (dB) |
| Example 1 | 1 | 1000 ppm | 1,460 | 2.36 | 0.96 | 0.92 | 10 | 34 |
|  | 2 | 1 % | 1,590 | 2.60 | 0.96 | 0.93 | 20 | 36 |
|  | 3 | 10 % | 1,500 | 2.45 | 0.95 | 0.93 | 10 | 34 |
| Comparative Example 1 | 1' | 100 ppm | 1,270 | 1.61 | 0.80 | 0.85 | 5 | 30 |

Example 2

Magnetic discs were manufactured in the same manner as in Example 1 except for adding 1.5 wt% Nb upon forming the first layer, and various tests were conducted in the same manner as in Example 1. The composition of Nb added was analyzed according to EPMA. The obtained results are shown in Table 3.

4

Comparative Example 2

Magnetic discs were manufactured in the same manner as in Example 2 except for reducing the oxygen content to 100 ppm and various tests were conducted in the same manner as in Example 1. The obtained results are shown in Table 3.

Table 3

| | Specimen No. | First layer | | Magnetic Property | | | | | |
|---|---|---|---|---|---|---|---|---|---|
| | | Oxygen content (Weight) | Additive element content (wt%) | Coercive force Hc (Oe) | Coercive force ratio: Hc ratio (circum-ferencial/ diametri-cal) | Square-ness ratio S | Square-ness ratio of coercive force S* | Magnetic aniso-tropic constant (x $10^5$ erg/cc) | SN ratio (dB) |
| Example 2 | 1 | 1000 ppm | Nb : 1.5 | 1510 | 2.45 | 0.95 | 0.93 | 10 | 34 |
| | 2 | 1 % | Nb : 1.5 | 1510 | 2.40 | 0.94 | 0.95 | 10 | 34 |
| | 3 | 10 % | Nb : 1.5 | 1400 | 2.27 | 0.94 | 0.95 | 8 | 33 |
| Comparative Example 2 | 1' | 100 ppm | Nb : 1.5 | 1300 | 1.70 | 0.82 | 0.91 | 6 | 31 |

Example 3

A magnetic disc was manufactured by incorporating oxygen into the first layer in the same manner as in Example 1 and forming thereon a filmy magnetic recording medium of 500 Å thickness comprising 20 wt% of Ni and up to 15 % by weight of rare earth elements in total with varied addition amount and the balance of Co as the second layer. The film-forming conditions are as shown in Table 4.

Table 4

| | First layer | Second layer |
|---|---|---|
| Vacuum degree attained (x $10^{-5}$Pa) | 2 | 2 |
| Sputtering gas pressure (Ar, Pa) | 0.48 | 1.2 |
| Sputtering gas pressure ($O_2$, x$10^{-3}$pa) | 0 - 4 | - |
| Target current (A) | 0.5 | 0.4 |
| Sputtering power (W) | 140 | 170 |
| Target-substrate distance (mm) | 100 | 100 |
| Substrate temperature (°C) | 30 | 30 |

The thus obtained magnetic discs were cut and the composition was analyzed respectively by using EPMA,SIMS and chemical analysis together and the magnetic property measured by a vibrational specimen type magnetometer. The obtained results are shown in Table 5. Oxygen was contained by about 100 ppm by weight in the second layer in all of the specimens.

5

Comparative Example 3

Magnetic discs were prepared in the same procedures as in Example 3, for the case where the addition amount of the rare earth element to the second layer was set to 18 % by weight which was out of the range for the preferred addition amount in the present invention and for the case where the addition amount of the rare earth element was within the range of the present invention but the amount of oxygen incorporated into the first layer was out of the preferred range in the present invention, and various tests were conducted in the same manner as in Example 3. The obtained results are shown in Table 5.

Table 5

| | Specimen No. | Oxygen content in first layer (weight) | Second layer Additive element : content (wt%) | Magnetic Property | | | |
|---|---|---|---|---|---|---|---|
| | | | | Coercive force Hc (Oe) | Coercive force ratio Hc ratio (circumferential/ diametrical) | Square-ness ratio S | Square-ness ratio of coercive force S* |
| Example 3 | 1 | 1 % | Y : 1.4 | 1370 | 2.12 | 0.84 | 0.90 |
| | 2 | 1 % | La : 1.3 | 1360 | 2.10 | 0.85 | 0.88 |
| | 3 | 1 % | Ce : 1.3 | 1310 | 2.24 | 0.88 | 0.87 |
| | 4 | 1000 ppm | Pr : 1.2 | 1320 | 2.30 | 0.87 | 0.88 |
| | 5 | 1 % | Pr : 1.2 | 1380 | 1.89 | 0.83 | 0.89 |
| | 6 | 10 % | Pr : 1.2 | 1380 | 2.10 | 0.81 | 0.85 |
| | 7 | 1 % | Pr : 3 | 1360 | 1.80 | 0.83 | 0.87 |
| | 8 | 1 % | Pr : 7 | 1290 | 2.21 | 0.90 | 0.91 |
| | 9 | 1 % | Nd : 2 | 1410 | 2.41 | 0.91 | 0.92 |
| | 10 | 1 % | Nd : 6 | 1390 | 2.35 | 0.89 | 0.90 |
| | 11 | 1 % | Nd : 12 | 1310 | 2.28 | 0.88 | 0.91 |
| | 12 | 1 % | Sm : 1.3 | 1480 | 2.40 | 0.92 | 0.91 |
| | 13 | 1 % | Sm : 7 | 1190 | 2.20 | 0.85 | 0.87 |
| | 14 | 1 % | Gd : 1.4 | 1270 | 2.17 | 0.84 | 0.91 |
| | 15 | 1 % | Tb : 1.2 | 1410 | 2.31 | 0.91 | 0.92 |
| | 16 | 1 % | Dy : 1.1 | 1390 | 2.33 | 0.90 | 0.90 |
| Comparative Example 3 | 1' | 100 ppm | Pr : 1.2 | 1350 | 1.65 | 0.87 | 0.86 |
| | 2' | 15 % | Pr : 1.3 | 920 | 1.40 | 0.81 | 0.84 |
| | 3' | 1 % | Pr : 18 | 820 | 1.92 | 0.80 | 0.86 |
| | 4' | 1 % | Sm : 18 | 860 | 2.01 | 0.82 | 0.86 |

Example 4

Magnetic discs were prepared in the same procedures as in Example 3 except for adding 1.5 wt% Nb upon forming the first layer, and various tests were conducted in the same manner as in Example 3. The composition for Nb was analyzed according to EPMA. The obtained results are shown in Table 6. About 100 ppm by weight of oxygen was contained in each of the specimens for the second layer.

Comparative Example 4

Magnetic discs were prepared in the same procedures as in Example 4 for the case where the addition amount of the rare earth element to the second layer was set to 18 % by weight which was out of the range for the preferred addition amount in the present invention and for the case where the addition amount of the rare earth element was within the range of the present invention but the amount of oxygen incorporated into the first layer was out of the preferred range in the present invention, and various tests were conducted in the same manner as in Example 4. The obtained results are shown in Table 6.

Table 6

| | Specimen No. | First Layer | | Second layer | Magnetic Property | | | |
|---|---|---|---|---|---|---|---|---|
| | | Oxygen content (weight) | Additive element: content (wt%) | Additive element : content (wt%) | Coercive force Hc (Oe) | Coercive force ratio Hc ratio (circum-ferential/ diametri-cal ) | Square-ness ratio S | Square-ness ratio of coercive force S* |
| Example 4 | 1 | 1000ppm | Nb : 1.5 | Pr : 1.2 | 1380 | 2.41 | 0.94 | 0.90 |
| | 2 | 1 % | Nb : 1.5 | Pr : 1.3 | 1290 | 2.45 | 0.95 | 0.93 |
| | 3 | 10 % | Nb : 1.5 | Pr : 1.2 | 1410 | 2.62 | 0.93 | 0.91 |
| | 4 | 1 % | Nb : 1.5 | Pr : 3 | 1440 | 2.12 | 0.88 | 0.90 |
| | 5 | 1 % | Nb : 1.5 | Pr : 7 | 1320 | 2.35 | 0.94 | 0.89 |
| | 6 | 1 % | Nb : 1.5 | Nd : 2 | 1430 | 2.52 | 0.96 | 0.91 |
| | 7 | 1 % | Nb : 1.5 | Nd : 6 | 1420 | 2.61 | 0.92 | 0.89 |
| | 8 | 1 % | Nb : 1.5 | Nd : 12 | 1380 | 2.43 | 0.91 | 0.89 |
| | 9 | 1 % | Nb : 1.5 | Sm : 1.3 | 1560 | 2.71 | 0.96 | 0.92 |
| | 10 | 1 % | Nb : 1.5 | Sm : 8 | 1320 | 2.31 | 0.91 | 0.87 |
| Comparative Example 4 | 1' | 100ppm | Nb : 1.5 | Pr : 1.2 | 1190 | 1.63 | 0.79 | 0.84 |
| | 2' | 15 % | Nb : 1.5 | Pr : 1.2 | 1020 | 1.53 | 0.83 | 0.85 |
| | 3' | 1 % | Nb : 1.5 | Pr : 18 | 850 | 1.64 | 0.85 | 0.86 |
| | 4' | 1 % | Nb : 1.5 | Sm : 18 | 850 | 2.01 | 0.85 | 0.84 |

Example 5

Onto aluminum substrates of 1.5 mm thickness applied with Ni-P primer plating, film layers each consisting only of Cr with 3000 Å film thickness were formed as the first layer by using a magnetron sputtering device and an oxygen gas was then introduced into the first layer. Then, filmy magnetic recording medium of 500 Å thickness comprising 20 wt% of Ni adn the balance of Co was formed as the second layer to prepare magnetic discs. In all of the specimens, the film-forming conditions are as shown in Table 7.

The thus obtained magnetic discs were cut and the compositions were analyzed respectively by using SIMS analysis and chemical analysis together and the magnetic property was measured by a vibrating sample magnetometer and a torque meter. The obtained results are shown in Table 8.

Table 7

|  | First layer | Second layer |
|---|---|---|
| Vacuum degree attained (x $10^{-5}$Pa) | 2 | 2 |
| Sputtering gas pressure (Ar, Pa) | 0.48 | 1.2 |
| Sputtering gas pressure (O$_2$, x$10^{-3}$pa) | 0 - 4 | 0.05- 4 |
| Target current (A) | 0.5 | 0.4 |
| Sputtering power (W) | 140 | 170 |
| Target-substrate distance (mm) | 100 | 100 |
| Substrate temperature (°C) | 30 | 30 |

Comparative Example 5

Magnetic discs were prepared in the same manner as in Example 5 for the case where the oxygen contents both in the first layer and the second layer was out of the preferred range in the present invention, and for the case where the oxygen content in the second layer was within the preferred range in the present invention but the oxygen content in the first layer is out of the range, and the various tests were conducted in the same manner as in Example 3. The obtained results are shown in Table 8.

Table 8

|  | Specimen No. | Oxygen content in the first layer (weight) | Oxygen content in the second layer (weight) | Magnetic Property | | | |
|---|---|---|---|---|---|---|---|
|  |  |  |  | Coercive force Hc (Oe) | Coercive force ratio Hc ratio (circum-ferential/diametri-cal) | Square-ness ratio S | Square-ness ratio of coercive force S* |
| Example 5 | 1 | 1000 ppm | 1 % | 1510 | 2.28 | 0.93 | 0.91 |
|  | 2 | 1 % | 1 % | 1580 | 2.40 | 0.95 | 0.93 |
|  | 3 | 10 % | 1 % | 1480 | 2.69 | 0.94 | 0.92 |
| Comparative Example 5 | 1' | 100 ppm | 15 % | 1050 | 1.43 | 0.95 | 0.90 |
|  | 2' | 15 % | 1 % | 1090 | 2.03 | 0.90 | 0.90 |
|  | 3' | 100 ppm | 100 ppm | 1170 | 1.29 | 0.80 | 0.85 |

Example 6

Magnetic discs were prepared in the same procedures as in Example 5 except for adding 1.5 wt% upon forming the first layer, and various tests were conducted in the same manner as in Example 3. The composition for Nb was analyzed according to EPMA. The obtained results are shown in Table 9.

8

Comparative Example 6

Magnetic discs were prepared in the same procedures as in Example 6 except for setting the oxygen content for the first layer out of the preferred range in the present invention and the various tests were conducted in the same manner as in Example 3. The obtained results are shown in Table 9.

Table 9

| | Specimen No. | First layer | | Oxygen content in the second layer (weight) | Magnetic Property | | | |
|---|---|---|---|---|---|---|---|---|
| | | Oxygen content (weight) | Additive element : content (wt%) | | Coercive force Hc (Oe) | Coercive force ratio Hc ratio (circum-ferential/ diametri-cal) | Square-ness ratio S | Square-ness ratio of coercive force S* |
| Example 6 | 1 | 1000 ppm | Nb : 1.5 | 1 % | 1480 | 2.30 | 0.91 | 0.93 |
| | 2 | 1 % | Nb : 1.5 | 1 % | 1520 | 2.67 | 0.95 | 0.96 |
| | 3 | 10 % | Nb : 1.5 | 1 % | 1410 | 2.61 | 0.92 | 0.95 |
| Comparative Example 6 | 1' | 15 % | Nb : 1.5 | 1 % | 1220 | 1.92 | 0.91 | 0.93 |
| | 2' | 100 ppm | Nb : 1.5 | 1 % | 1280 | 1.65 | 0.82 | 0.91 |

Example 7

Magnetic discs were prepared in the same procedures as in Example 5 except for setting Ni content to 20 wt% and varying the addition amount of the rare earth elements within a total range of less than 15 wt%, with the balance being Co, and various tests were conducted in the same manner as in Example 3. The obtained results are shown in Table 10.

Comparative Example 7

Magnetic discs were prepared in the same procedures as in Example 7 except for changing the oxygen content for the first layer and the second layer to 100 ppm respectively and adding 1.2 wt% Pr as the rare earth element for the second layer, and various tests were conducted in the same manner as in Example 3. The obtained results are shown in Table 10.

Table 10

| | Specimen No. | Oxygen content in the first layer (weight) | Second layer | | Magnetic Property | | | |
|---|---|---|---|---|---|---|---|---|
| | | | Oxygen content (weight) | Additive element : content (wt%) | Coercive force Hc (Oe) | Coer ive force ratio Hc ratio (circumferential/ diametrical) | Squareness ratio S | Squareness ratio of coercive foce S* |
| Example 7 | 1 | 1 % | 1 % | Y : 1.5 | 1480 | 2.23 | 0.94 | 0.91 |
| | 2 | 1 % | 1 % | La : 2 | 1520 | 2.40 | 0.95 | 0.92 |
| | 3 | 1 % | 1 % | Ce : 1.2 | 1500 | 2.33 | 0.91 | 0.91 |
| | 4 | 1000ppm | 1 % | Pr : 1.2 | 1410 | 1.93 | 0.90 | 0.88 |
| | 5 | 1 % | 1 % | Pr : 1.2 | 1590 | 2.60 | 0.96 | 0.93 |
| | 6 | 10 % | 1 % | Pr : 1.3 | 1430 | 2.10 | 0.91 | 0.90 |
| | 7 | 1 % | 1000ppm | Pr : 1.1 | 1420 | 2.21 | 0.91 | 0.90 |
| | 8 | 1 % | 10 % | Pr : 1.2 | 1250 | 2.18 | 0.92 | 0.93 |
| | 9 | 1 % | 1 % | Pr : 3 | 1420 | 2.25 | 0.93 | 0.91 |
| | 10 | 1 % | 1 % | Pr : 7 | 1310 | 2.30 | 0.96 | 0.90 |
| | 11 | 1 % | 1 % | Nd : 2 | 1610 | 2.70 | 0.96 | 0.91 |
| | 12 | 1 % | 1 % | Nd : 6 | 1410 | 2.41 | 0.94 | 0.91 |
| | 13 | 1 % | 1 % | Nd : 12 | 1300 | 2.03 | 0.91 | 0.92 |
| | 14 | 1 % | 1 % | Sm : 1.3 | 1620 | 2.45 | 0.93 | 0.91 |
| | 15 | 1 % | 1 % | Sm : 7 | 1190 | 2.22 | 0.93 | 0.90 |
| | 16 | 1 % | 1 % | Gd : 1.2 | 1380 | 2.20 | 0.90 | 0.90 |
| | 17 | 1 % | 1 % | Tb : 1.1 | 1560 | 2.30 | 0.92 | 0.91 |
| | 18 | 1 % | 1 % | Dy : 1.3 | 1590 | 2.41 | 0.94 | 0.93 |
| Comparative Example 7 | 1' | 100ppm | 100ppm | Pr : 1.2 | 1350 | 1.65 | 0.87 | 0.86 |

EP 0 342 966 A2

Example 8

Magnetic discs were prepared in the same procedures as in Example 7 except for adding 1.5 wt% Nb when forming the first layer and various tests were conducted in the same manner as in Example 3. The obtained results are shown in Table 11.

Comparative Example 8

A magnetic disc was prepared in the same procedures as in Example 7 except for changing the oxygen content for the first layer and the second layer to 100 ppm respectively and various tests were conducted in the same manner as in Example 3. The obtained results are shown in Table 11.

Table 11

| | First layer | | | Second layer | | Magnetic property | | | |
|---|---|---|---|---|---|---|---|---|---|
| | Specimen No. | Oxygen Content (weight) | Additive element : content (wt%) | Oxygen content (weight) | Additive element : content (wt%) | Coercive force Hc (Oe) | Coercive force ratio Hc ratio (circumferential/diametrical) | Squaremess ratio S | Squareness ratio of coercive force S* |
| Example 8 | 1 | 1000 ppm | Nb : 1.5 | 1 % | Pr : 1.3 | 1420 | 1.91 | 0.94 | 0.89 |
| | 2 | 1 % | Nb : 1.5 | 1 % | Pr : 1.2 | 1620 | 2.20 | 0.91 | 0.91 |
| | 3 | 10 % | Nb : 1.5 | 1 % | Pr : 1.1 | 1510 | 2.30 | 0.90 | 0.93 |
| | 4 | 1 % | Nb : 1.5 | 1000 ppm | Pr : 1.2 | 1500 | 2.35 | 0.91 | 0.92 |
| | 5 | 1 % | Nb : 1.5 | 10 % | Pr : 1.2 | 1260 | 2.11 | 0.92 | 0.90 |
| | 6 | 1 % | Nb : 1.5 | 1 % | Pr : 7 | 1410 | 2.30 | 0.92 | 0.90 |
| | 7 | 1 % | Nb : 1.5 | 1 % | Pr : 12 | 1230 | 2.28 | 0.92 | 0.90 |
| | 8 | 1 % | Nb : 1.5 | 1 % | Nd : 2 | 1600 | 2.64 | 0.94 | 0.93 |
| | 9 | 1 % | Nb : 1.5 | 1 % | Nd : 6 | 1590 | 2.50 | 0.96 | 0.91 |
| | 10 | 1 % | Nb : 1.5 | 1 % | Nd : 13 | 1310 | 2.39 | 0.91 | 0.92 |
| | 11 | 1 % | Nb : 1.5 | 1 % | Sm : 1.3 | 1580 | 2.41 | 0.93 | 0.90 |
| | 12 | 1 % | Nb : 1.5 | 1 % | Sm : 8 | 1490 | 2.14 | 0.92 | 0.91 |
| Comparative Example 8 | 1' | 100 ppm | Nb : 1.5 | 100 ppm | Pr : 1.2 | 1190 | 1.63 | 0.79 | 0.84 |

EP 0 342 966 A2

In the magnetic disc according to the present invention since oxygen is further incorporated in the first layer substantially comprising Cr and the second layer comprises a filmy magnetic recording medium substantially comprising Co or Co-Ni system, static magnetic property and electromagnetic conversion property can remarkably be improved as compared with those magnetic discs not-incorporated with oxygen. Further, since the magnetic disc can be prepared by oxygen introduction under easy control, it can be produced stably at excellent crystal orientation with no variations on every film-formation. Furthermore, remarkable improvement can be obtained for various characteristics such as coercive force or corrosion resistance by adding specific metal elements to the first layer, or adding oxygen or specific rare earth elements to the second layer.

## Claims

1. A magnetic disc having a first layer substantially comprising Cr and a second layer which is a filmy magnetic recording medium of Co-Ni or Co-system, formed on a non-magnetic substrate, wherein oxygen is incorporated in said first layer.

2. A magnetic disc as defined in claim 1, wherein the oxygen content is less than 10% by weight in the first layer.

3. A magnetic disc as defined in claim 2, wherin the oxygen content is from 500 ppm by weight to 10% by weight.

4. A magnetic disc as defined in any preceding claim, wherein the first layer contents at least one of the elements, Cu, Ta, W, Nb, Ti, V, Zr, Mo and Zn.

5. A magnetic disc as defined in claim 4, wherein at least one of said elements is present in an amount less than 10 wt%.

6. A magnetic disc as defined in any preceding claim, wherein the film thickness of the firstlayer is from 500 to 6000Å.

7. A magnetic disc as defined in any preceding claim, wherein the second layer of Co-Ni system contains less than 30 % by weight of Ni.

8. A magnetic disc as defined in any preceding claim, wherein the second layer further contains oxygen.

9. A magnetic disc as defined in claim 8, wherein the oxygen content is within a range from 500 ppm by weight to 10% by weight.

10. A magnetic disc as defined in any preceding claim, wherein the second layer further contains at least one of the elements Y, La, Ce, Pr, Nd, Sm, Gd, Tb and Dy.

11. A magnetic disc as defined in claim 10, wherein said at least one element is present in an amount less than 15% by weight.

12. A magnetic disc as defined in claim 11, wherein said at least one element is contained within a range from 500 ppm by weight to 10% by weight.

13. A magnetic disc as defined in in any preceding claim, wherein the film thickness of the second layer is from 0.01 to 0.15 um.

14. A magnetic disc as defined in any preceding claim, wherein the non-magnetic substrate comprises Al, Al applied with Ni-P primer plating, $Al_2O_3$, heat resistant plastic or glass.

15. A magnetic disc as defined in any preceding clai, wherein the film for the first and second layers are formed by means of sputtering, vacuum vapour deposition, ion plating, or other suitable process.